# EUROPÄISCHE PATENTANMELDUNG

(11) **EP 2 012 237 A1**
(43) Veröffentlichungstag der Anmeldung: **07.01.2009**
(21) Anmeldenummer: 07012960.6
(22) Anmeldetag: 02.07.2007
(51) Int. Cl.: G06F 11/32

(54) **Verfahren zur Auswertung mindestens eines Kennwertes**

(71) Anmelder: SIEMENS AKTIENGESELLSCHAFT, 80333 München (DE)
(72) Erfinder: Opaterny, Thilo, 90453 Nürnberg (DE)

(57) **Zusammenfassung**

Das anmeldungsgemäße Verfahren verwendet zur Auswertung mindestens eines Kennwertes mindestens einer Funktion im Ablauf eines Programms eine graphische Darstellung des den Funktionen zugehörigen ermittelten mindestens einen Kennwertes. Die Darstellung weist eine hierarchische Aufteilung auf, abhängig von Grad der Aufruf tiefe der Funktion und jeder Aufruf einer Funktion in der graphischen Darstellung belegt eine Fläche, die in der Größe abhängig ist von dem jeweils zugehörigen ermittelten Kennwert.

Kennwerte können dabei alle durch einen Profiler messbaren Größen sein, wie in der Einleitung bereits ausgeführt. Üblicherweise erfolgt eine Ausführung eines Programmes über den Aufruf erster Funktionen, im Folgenden auch Aufruftiefe 1 genannt. Diese Funktionen rufen gegebenenfalls weitere Funktionen, also der Aufruf tiefe 2, auf und so weiter, bis die gewünschte Aufgabe abgearbeitet ist. Dabei können Funktionen auch mehrfach und durchaus aus mehreren Aufruftiefen heraus aufgerufen werden, eine Funktion ist in der Aufruftiefe nicht festgelegt.

## Beschreibung

### Fachgebiet der Erfindung

Die Erfindung betrifft ein Verfahren zur Auswertung mindestens eines Kennwertes mindestens einer Funktion im Ablauf eines Programms, insbesondere bei der Entwicklung von Software, beispielsweise beim Auffinden, Diagnostizieren und Beheben von Fehlern in Hardware und Software.

Beim Entwickeln eines Programmes versucht man, Unnötiges zu vermeiden, damit das Programm schnell genug wird und die vollständige Abarbeitung der Aufgabe innerhalb des gegebenen Zeitrahmens erledigt werden kann.

Gelegentlich ändern sich aber auch während des Entwicklungsprozesses die Rahmenbedingungen und die Ausführung eines zuvor ausreichend performanten Programmes wird behindert.

### Stand der Technik

Durch die Verwendung eines sogenannten Profilers werden üblicherweise Laufzeiten der Funktionen innerhalb eines Programms untersucht. Als Profiler werden Programmierwerkzeuge bezeichnet, die das Laufzeitverhalten von Software analysieren. Es gibt unterschiedliche Problembereiche in der Softwareentwicklung, die durch ineffiziente Programmierung ausgelöst werden. Ein Profiler hilft dem Entwickler durch Analyse und Vergleich von laufenden Programmen die Problembereiche aufzudecken. Daraus kann man Maßnahmen zur strukturellen und algorithmischen Verbesserung des Quellcodes ableiten.

Die häufigste Anwendung eines Profilers ist das Zählen und Messen der Aufrufe und Durchläufe von Funktionen. Dies ermöglicht es dem Programmierer herauszufinden, wo sich eine Optimierung des Programms lohnt. Eine Optimierung von Funktionen, die nicht häufig verwendet werden, ist der Gesamtleistung des Programms nicht sonderlich zuträglich und erschwert in der Regel die Wartbarkeit des Quellcodes. Deshalb wird das Hauptaugenmerk auf Funktionen gelegt, die oft aufgerufen werden und in der Summe der Aufrufe viel Zeit benötigen. Ein weiterer Aspekt ist die Verfolgung von Speichernutzung durch ein Programm. Der Profiler soll dabei helfen, den Ge-und Verbrauch von Arbeitsspeicher zu optimieren und ggf. Fehler in der Programmierung aufzudecken, durch die nicht mehr genutzte Speicherbereiche nicht freigeben werden. Moderne Profiler bieten die Möglichkeit nebenläufige Prozesse in ihrem Lebenszyklus graphisch (zum Beispiel als Balken- oder Netzdiagramm) darzustellen. Diese optische Aufbereitung soll einem Programmierer helfen, das Laufzeitverhalten von nebenläufigen Prozessen besser zu interpretieren und Fehler durch Verklemmung (Deadlock) aufzudecken.

Bei der Messung der Funktionen, genauer Dauer und Häufigkeit der Ausführung der Funktionen in einem bestimmten Szenario, durch den Profiler entsteht in der Regel eine Tabelle. Enthalten sein können hier z. B. folgende Spalten:
1. Name der Funktion
2. Wie oft wurde die Funktion aufgerufen?
3. Wie lange dauerten die Aufrufe in Summe?
4. Wie viel Zeit davon wurde insgesamt (netto) innerhalb der Funktion selber verbraucht und in darin wiederum aufgerufenen Funktionen?
5. Von welchen Funktionen wurde die Funktion aufgerufen? a. und wie oft?
6. Wie viel Zeit hat die schnellste Ausführung der Funktion gedauert?
   a. eigene Zeit (netto)?
   b. Insgesamt (brutto)?
7. Wie viel Zeit hat die langsamste Ausführung der Funktion gedauert
   a. eigene Zeit (netto)?
   b. Insgesamt (brutto)?
8. Varianz der einzelnen Ausführungszeiten
   a. eigene Zeit (netto)?
   b. Insgesamt (brutto)?

Es handelt sich bei den oben aufgeführten Werten nicht um eine abschließende Aufzählung, weitere Werte können vom Profiler ermittelt werden. Allein die Frage nach den aus der gemessenen Funktion heraus aufgerufenen weiteren Funktionen (also sich hierarchisch in der nächsten Aufrufebene befindenden Funktionen) füllt bereits wieder eine weitere Tabelle. Damit wird abhängig von der Komplexität des durch den Profiler geprüften Programmes / der geprüften Funktion eine wachsende Datenmenge, die es dem Anwender, Tester und/oder Programmierer schwer macht, die für die Optimierung geeignete Funktion in dem Datenwust zu finden.

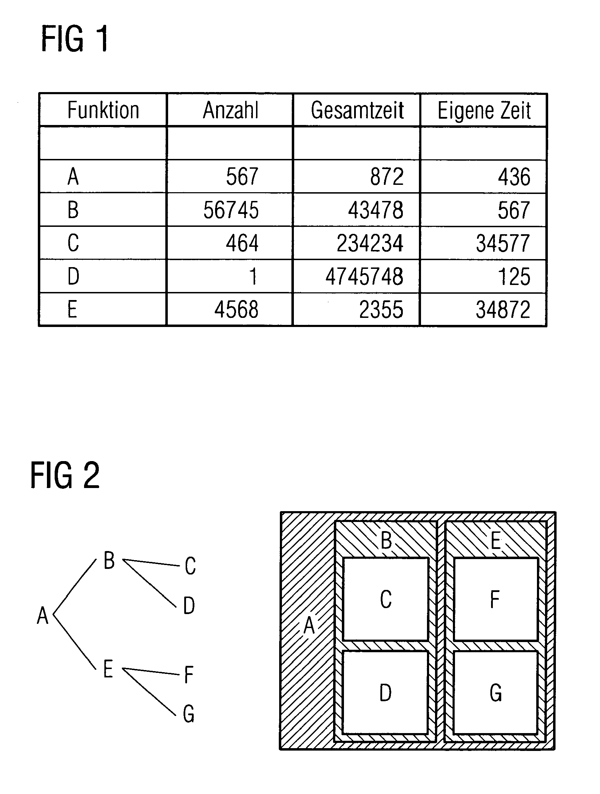

Beispielhaft sei für eine Ergebnistabelle eines Profilers auf die Tabelle der Figur 1 verwiesen, welche für die fünf Funktionen A, B, C, D, E, insgesamt jeweils drei Werte Anzahl, Gesamtzeit und Eigene-Zeit aufweist, welche eine Momentaufnahme während des Messvorgangs darstellt.

Dabei läuft die Funktion D zwar insgesamt die längste Zeit, wird aber selber nur einmal aufgerufen und benötigt nur einen geringen Teil der Zeit als Eigene-Zeit. Funktion B dagegen wird sehr häufig aufgerufen, d. h. wenn es gelingt diese zu optimieren, dann hätte dies einen großen Effekt auf die Gesamtzeit. Funktion B benötigt wiederum nur einen geringen Teil der Zeit als Eigene-Zeit, was nahe legt, dass eine Optimierung innerhalb der Funktion B schwierig wird. Funktion E benötigt umgekehrt sehr viel Eigene-Zeit, so dass eine kleine Optimierung in dieser Funktion möglicherweise einen höheren Einsparungs-Effekt bewirkt. Es könnte aber auch sein, dass die Funktion so häufig aufgerufen wird weil z. B. ein Fehler in der Programmierung vorliegt.

Die Interpretation der Werte ist an sich bereits anspruchsvoll, bei einer Vielzahl von Zahlen wird es quasi unmöglich, hier einen Überblick zu behalten. Als Hilfsmittel stehen derzeit Filter und die Sortierung der Werte der Tabelle zur Verfügung.

Aufgabe der Erfindung ist es, ein Verfahren anzugeben, mittels dessen einem Benutzer die Auswertung der ermittelten Kennwerte erleichtert wird.

### Darstellung der Erfindung

Diese Aufgabe wird gelöst durch ein Verfahren gemäß Patentanspruch 1. Das Verfahren verwendet zur Auswertung mindestens eines Kennwertes mindestens einer Funktion im Ablauf eines Programms eine graphische Darstellung des den Funktionen zugehörigen ermittelten mindestens einen Kennwertes.

Die Darstellung weist eine hierarchische Aufteilung auf, abhängig von Grad der Aufruftiefe der Funktion und jeder Aufruf einer Funktion in der graphischen Darstellung belegt eine Fläche, die in der Größe abhängig ist von dem jeweils zugehörigen ermittelten Kennwert.

Kennwerte können dabei alle durch einen Profiler meßbaren Größen sein, wie in der Einleitung bereits ausgeführt. Üblicherweise erfolgt eine Ausführung eines Programmes über den Aufruf erster Funktionen, im Folgenden auch Aufruftiefe 1 genannt. Diese Funktionen rufen gegebenenfalls weitere Funktionen, also der Aufruftiefe 2, auf und so weiter, bis die gewünschte Aufgabe abgearbeitet ist. Dabei können Funktionen auch mehrfach und durchaus aus mehreren Aufruftiefen heraus aufgerufen werden, eine Funktion ist in der Aufruftiefe nicht festgelegt.

Die Aufruftiefe der betroffenen Funktion wird abgebildet in einer sogenannten hierarchische Aufteilung der graphischen Darstellung. Geeignet sind hier beispielsweise ineinander geschachtelte Flächen. Vorteilhaft ist es hierbei den bereits bekannten Treemapping Algorithmus von Shneiderman anzuwenden, welcher ursprünglich zur Visualisierung von Verzeichnisbäumen entwickelt wurde.

Vorteilhafte Ausgestaltungen und Weiterbildungen sind in den Unteransprüchen angegeben.

Die hierarchische Aufteilung kann dergestalt durchgeführt werden, dass die Hauptfunktion genannte Funktion, welche als erste im Programm aufgerufen wird (Aufrufebene 0, beispielsweise *main()*), zunächst die gesamte Darstellungsfläche belegt.

Die erste Aufrufebene der Funktionen, welche in Folge von der Hauptfunktion aufgerufen werden, teilen dann die zur Verfügung stehend Fläche der Hauptfunktion in einer ersten Weise auf. Die nachfolgende Aufrufebene 2 der Funktionen teilen die Fläche der sie jeweils aufrufenden Funktion der jeweils vorhergehenden Aufrufebene in festgelegter Weise aufteilt und dieser Schritt nach Bedarf iterativ wiederholt wird.

Die Aufteilung der Fläche im ersten und jedem folgenden Schritt kann dabei beispielsweise alternierend horizontal und vertikal erfolgen. Dies hat zur Folge, dass die Flächen visuell gut trennbar bleiben und eine Beschriftung möglich ist.

Bei dem dargestellten Kennwert handelt es sich vorteilhafterweise um einen Wert der eine hohe Aussagekraft bei der Auswertung und Entdeckung von Problembereichen bei der Programmentwicklung darstellen. Hierbei sind vor allem die Gesamtausführungsdauer der Funktion und auch die Ausführungshäufigkeit der Funktion zu nennen.

In einer Weiterbildung der Erfindung wird eine dreidimensionale Darstellungsform, insbesondere eine Kissenform der jeweiligen Darstellungsflächen, gewählt. Hierbei bestimmt sich die Grundfläche des Kissens nach einem ersten Kennwert und die Höhe des Kissens nach einem zweiten, vom ersten verschiedenen Kennwert.

Durch Filtermöglichkeiten kann die dargestellte Datenmenge auch noch in vorteilhafter Weise reduziert werden um eine leichtere Auswertbarkeit zu bieten.

Da ein Profiler die Kennwerte während des laufenden Programmbetriebs misst, ändern diese sich zur Laufzeit auch dynamisch. Es ist daher eine weiterer Vorteil der Erfindung, wenn die Flächen in der Größe an den jeweils aktuell ermittelten Kenngrößenwert angepasst werden. Dies erzeugt ein in der Zeitachse dynamisches Bild, welches durch die damit darstellbaren Änderungen einen weiteren wichtigen Hinweis auf Probleme im Programmablauf geben kann, beispielsweise wenn eine Fläche (die eine Funktion repräsentiert) überdurchschnittlich wächst oder sonstiges unerwartetes Verhalten im Vergleich zu anderen Funktionen zeigt.

### Kurzbeschreibung der Zeichungen

Im folgenden wird die Erfindung anhand von Ausführungsbeispielen erläutert. Dabei zeigen
- Figur 1: wie bereits in der Einleitung beschrieben eine beispielhafte Tabelle über ein Programm bestehend aus 5 Funktionen und die zugehörigen gemessenen Kennwerte Anzahl, Gesamtzeit und Eigene-Zeit.
- Figur 2: zeigt einen beispielhaften ersten Aufrufbaum mit zugehörigem Diagramm und
- Figur 3: einen weiteren beispielhaften Aufrufbaum mit zugehörigem Diagramm.

### Beschreibung der bevorzugten Ausgestaltungsformen

Für eine detaillierte Beschreibung der Figur 1 wird auf die Beschreibungseinleitung verwiesen.

Figur 2 zeigt auf der linken Seite einen ersten beispielhaften Aufrufbaum. Das Programm wird gestartet mit einer Hauptfunktion (oder Toplevelfunktion) in der Aufrufebene 0, hier Funktion A genannt. Diese zeichnet sich zunächst dadurch aus, dass sie von keiner anderen Funktion aufgerufen wird. In der Graphik rechts belegt A zunächst die ganze Fläche (dunkel schraffiert). Die Funktion ruft dann die Funktionen B und E auf (wobei durch die Graphik zunächst kein Hinweis gegeben wird, wie die zeitliche Korrelation der Aufrufe ist, d. h. ob beispielsweise B und E parallel laufen oder sequentiell abgearbeitet werden. Ebensolches gilt dann für die nächste Aufrufebene 1, in der die Funktion B die Funktionen C und D aufruft und die Funktion E die Funktionen F und G.

Auf der rechten Seite der Figur in der anmeldungsgemäßen Graphik ist nun die Gesamtfläche der Funktion A zunächst aufgeteilt in die beiden senkrechten Blöcke B und E (etwas heller schraffiert), welche im vorliegenden Fall die Fläche von A zu gleichen Teilen aufteilen. Dies ist aber nur Zufall, da die Flächenverteilung von B und E abhängig von der gewählten Kenngröße ist. Das heißt, dass die Fläche von B auch wesentlich kleiner oder wesentlich größer sein kann als diejenige von E.

Im nächsten Schritt der Erzeugung der Darstellung wird die nächste Hierarchieebene der Aufrufe erzeugt, welches wieder in der gleichen Weise jeweils die repräsentativen Flächen der Funktionen B und E aufteilt, wie bereits beschrieben. In rekursiver Weise werden so alle Aufrufebenen (soweit gewünscht oder definiert) abgearbeitet und die Darstellungstiefe immer feiner.

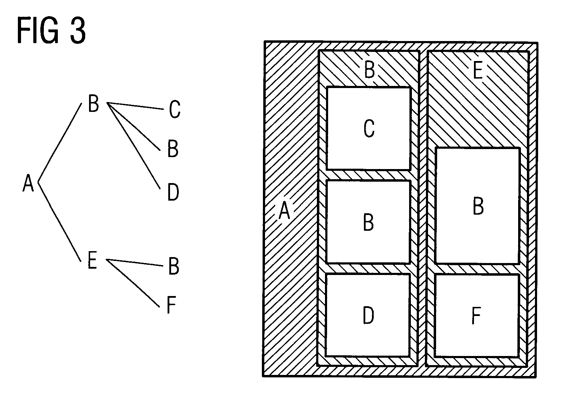

Die Figur 3 unterscheidet sich von der Figur 2 dahingehend, dass die Funktion B in der nächsten Aufrufebene einen zusätzlichen Aufruf von sich selber enthält und auch die Funktion E einen Aufruf der Funktion B enthält. Es wird bei der Berechnung der Darstellung keine Unterscheidung getroffen, der Aufrufbaum kann hier alle möglichen Formen aufweisen. Durch die graphische Darstellung sind dabei (ungewünschte) Schleifen sogar besser zu erkennen als in der herkömmlichen Tabellen-Aufbereitung. Weiterhin ist in der Figur 3 auch gut zu erkennen, dass die Fläche der Funktion B größer ist als die der Figur E und auch die Flächen der einzelnen Funktionen C, B, D und F jeweils unterschiedliche Größen aufweisen.

Es könnte sich auch um ein Abbild der Darstellung desselben Programmes zu einem späteren Zeitpunkt handeln, bei dem die Funktion G vollständig abgearbeitet wurde und dafür jeweils neue Funktionen aufgerufen wurden.

Eine beispielhafte Anwendung ist bei der Entwicklung von Steuerungen in der Anlagentechnik.

Eine Vielzahl von Funktionen und Variablen ist hier überwachbar, beispielhaft werden einige wenige im Folgenden aufgezählt:
Ein FB ist für den Einsatz eines Umrichters zur Ansteuerung einer Drehbewegung für Getriebe mit fester Teilung konzipiert. Es gibt nur einen Positionsschalter zum Abschalten aus beiden Richtungen.

Beim Beschleunigen aus definierter Position, sowie Abschaltung durch Positionsschalter wird der Wert (RAMPE_POS) verwendet. (sollte 100ms betragen). Beim Beschleunigen aus undefinierter Position (RAMPE_AUF) und bei Halt in undefinierter Position der Wert von (RAMPE_AB).

Bei Weiterfahrt aus undefinierter Position wird die Geschwindigkeit (V_LANGSAM) ausgegeben.

Ein weiterer FB Einfahrweichen bis zu 3 Abgänge Der Baustein übernimmt die Ansteuerung von Einfahrweichen mit dem dazugehörigen Warteblock

Es gibt einen FB zur Überwachung von Druck- und Flussfehlern, Integration einer zeitlichen Ausregelung

Visualisierung, Bedienung und Fehlerbehandlung bei Klebefehlern, wird durch einen FB bewertet

Der nächste FB fragt die Adresse interner Strukturen aus seinem Instanz DB an, indem er sie als INPUT-Parameter <Structur> übergibt.

Über die ANY Pointer Analyse wird der DB, der Beginn(DW) und die Länge der Struktur zurückgegeben !

Ein Wert kann für die Energie Verbrauchsmessung verwendet werden

Oder auch zur Stromverbrauchserfassung

Der Stromverbrauch wird mit einem Stromzähler erfasst. Die Stromimpulse können je nach Einstellung am Zähler folgenden Werten entsprechen:

| | | | |
|---|---|---|---|
| 0,01 | kWh | pro | Impuls |
| 0,10 | kWh | pro | Impuls |
| 1,00 | kWh | pro | Impuls |
| 10,00 | kWh | pro | Impuls |
| 100,00 | kWh | pro | Impuls |

Beschreibung der Bezeichner:
- Stromimpuls:: Impulse vom Stromzähler
- Schichtwechsel:: Bit zum Rücksetzen der Zählwerte bei Schichtwechsel
- Auflösung:: Auflösung je nach Einstellung des Stromzählers
- Verbrauch:: Verbrauch in der aktuellen Schicht; kann direkt parametriert werden oder auf Datenwort im DB 21, wenn mehrere Stromzähler vorhanden sind.
- Daten:: Arbeitsdaten im DB 21

Die Luftverbrauchsmessung Analog kann überwacht werden

Der Luftverbrauch wird durch eine Analogsensor im Sekundentakt ermittelt (Sensor kann 4 bis 20 mA liefern).

Die Nichtlinearitäten des Sensors werden von diesem Baustein anhand einer Näherungskurve ausgeglichen.

Beschreibung der Bezeichner:

| | |
|---|---|
| IB_Run: | Interbus laeuft |
| Sek_Takt: | Sekundentakt M5.0 |
| AD_Wandler_Wort0/1_IN1/2: | Eingangsworte 0/1 des A/D-Wandler in mA (Normiert) von Analogwand-1er IB IL AI 8/SF. |
| Schichtwechsel: | Bit zum Rücksetzen der Zählwerte bei Schichtwechsel |
| DB_Daten_1/2: | Arbeitsdaten im DB 22 |

Beispielhaft auch die Ansteuerung Motorschalter

Dieser Baustein übernimmt folgende Funktionen:
1. Parametrierung des Motorenstroms
2. Freigabe der Statuswortumschaltung
3. Quittieren von Fehlermeldungen
4. Unterdrücken der Fehlermeldung bei ausgeschalteter Leistung
5. Ansteuern des Motors und des 24 V Ausgangs

## Patentansprüche

1. Verfahren zur Auswertung mindestens eines Kennwertes (Anzahl, Gesamtzeit, Eigene Zeit) mindestens einer Funktion (Funktion) im Ablauf eines Programms (A, B, C, D, E), mittels einer graphischen Darstellung der den Funktionen zugehörigen ermittelten Kennwerte,
bei dem die Darstellung eine hierarchische Aufteilung aufweist abhängig von Grad der Aufruftiefe der Funktion und jeder Aufruf einer Funktion in der graphischen Darstellung eine Fläche belegt, die in der Größe abhängig ist von dem jeweils zugehörigen ermittelten Kennwert.

2. Verfahren nach Patentanspruch 1,
**dadurch gekennzeichnet, dass**
die hierarchische Aufteilung dergestalt durchgeführt wird, dass
a) die Hauptfunktion (A) die gesamte Darstellungsfläche belegt,
b) die erste Aufrufebene der Funktionen (B, E) die zur Verfügung stehend Fläche der Hauptfunktion in einer ersten Weise, auf und
c) die nachfolgende Aufrufebene der Funktionen (B, C, D, F, G) die Fläche der aufrufenden Funktion der jeweils vorhergehenden Aufrufebene in festgelegter Weise aufteilt und
d) Schritt c) nach Bedarf wiederholt.

3. Verfahren nach Patentanspruch 2,
**dadurch gekennzeichnet, dass**
die Aufteilung der Fläche gemäß einem treemapping Algorithmus erfolgt.

4. Verfahren nach einem der vorigen Patentansprüche,
**dadurch gekennzeichnet, dass**
jede Funktion mindestens einmal aufgerufen wird.

5. Verfahren nach einem der vorigen Patentansprüche,
**dadurch gekennzeichnet, dass**
es sich bei dem Kennwert um die Gesamtausführungsdauer (Gesamtzeit) der Funktion handelt.

6. Verfahren nach einem der vorigen Patentansprüche,
**dadurch gekennzeichnet, dass**
es sich bei dem Kennwert um die Ausführungshäufigkeit (Anzahl) der Funktion handelt.

7. Verfahren nach einem der vorigen Patentansprüche,
**dadurch gekennzeichnet, dass**
eine dreidimensionale Darstellungsform, insbesondere eine Kissenform, gewählt wird, bei der sich die Fläche nach einem ersten Kennwert bestimmt und die Höhe nach einem zweiten Kennwert bestimmt.

8. Verfahren nach einem der vorigen Patentansprüche,
**dadurch gekennzeichnet, dass**
durch Filtermöglichkeiten die dargestellte Datenmenge reduziert werden kann.

9. Verfahren nach einem der vorigen Patentansprüche,
**dadurch gekennzeichnet, dass**
die belegte Fläche während der Laufzeit dynamisch an einen neu ermittelten Kennwert angepasst wird.

10. Verfahren nach einem der vorigen Patentansprüche,
**dadurch gekennzeichnet, dass**
eine Anwendung im Automatisierungsumfeld erfolgt.
